Europäisches Patentamt

European Patent Office

Office européen des brevets

(19)

(11) Veröffentlichungsnummer : **0 402 783 B1**

# (12) EUROPÄISCHE PATENTSCHRIFT

(45) Veröffentlichungstag der Patentschrift :
**11.11.92 Patentblatt 92/46**

(51) Int. Cl.$^5$ : **B01J 8/02,** // B01D53/04,
B01D53/26

(21) Anmeldenummer : **90110862.1**

(22) Anmeldetag : **08.06.90**

(54) **Reaktor.**

(30) Priorität : **16.06.89 DE 3919750**

(43) Veröffentlichungstag der Anmeldung :
**19.12.90 Patentblatt 90/51**

(45) Bekanntmachung des Hinweises auf die
Patenterteilung :
**11.11.92 Patentblatt 92/46**

(84) Benannte Vertragsstaaten :
**AT BE DE ES FR GB IT NL SE**

(56) Entgegenhaltungen :
**EP-A- 0 118 349**
**GB-A- 546 285**
**US-A- 1 429 856**
**US-A- 2 517 525**

(73) Patentinhaber : **Linde Aktiengesellschaft**
**Abraham-Lincoln-Strasse 21**
**W-6200 Wiesbaden (DE)**

(72) Erfinder : **Libal, Klaus, Dipl.-Ing.**
**Karl-Singer-Strasse 8**
**W-8000 München 71 (DE)**
Erfinder : **Fierlbeck, Walter**
**Wasserburger Landstrasse 34c**
**W-8000 München 82 (DE)**
Erfinder : **V. Gemmingen, Ulrich, Dr.**
**Dipl.-Phys.**
**Sturystrasse 4**
**W-8000 München 40 (DE)**

(74) Vertreter : **Schaefer, Gerhard, Dr.**
**Linde Aktiengesellschaft Zentrale**
**Patentabteilung**
**W-8023 Höllriegelskreuth (DE)**

## Beschreibung

Die Erfindung betrifft einen Reaktor, der im wesentlichen zylindersymmetrisch um eine im wesentlichen vertikal verlaufende Achse aufgebaut ist und einen Mantel und innerhalb des Mantels ein ringförmiges Bett aufweist, welches mit rieselfähigem Material gefüllt ist und durch einen inneren und einen äußeren Korb, sowie an seiner Unterseite durch einen von unten her am Mantel abgestützten Boden begrenzt ist, wobei beide Körbe in radialer Richtung starr und an ihrer Unterseite starr mit dem Mantel verbunden sind.

Für derartige Reaktoren besteht ein weiter Anwendungsbereich. Sie können für die verschiedensten Reaktionen zwischen einem Gas und einem aktiven Material, welches in rieselfähiger Form vorliegt, eingesetzt werden. Das aktive Material kann beispielsweise ein Adsorbens oder ein Katalysator sein. Der Reaktor kann mehrere Arten von aktivem Material enthalten und aus mehr als einem Bett bestehen. Ein Bett wird in diesem Fall vom benachbarten konzentrisch umschlossen.

Während der Reaktionsphase wird ein Reaktionsgas in etwa radial zur Symmetrieachse des Reaktors durch das mit aktivem, rieselfähigem Material gefüllte Bett geführt, indem es beispielsweise dem Raum zwischen Mantel und äußerem Korb zugeleitet und von dem Raum innerhalb des inneren Korbes wieder abgezogen wird. Im Falle einer Adsorptionsreaktion nimmt die Reaktionsfähigkeit des aktiven Materials (Adsorbens) mit zunehmender Reaktionsdauer ab. Daher muß das Adsorbens in regelmäßigen Zeitabständen regeneriert werden. Während der Regenerierphase wird ein Regeneriergas, das gegenüber dem zu reinigenden eine andere chemische Zusammensetzung und/oder einen anderen thermodynamischen Zustand aufweist, durch die Schüttung aus aktivem Material geleitet.

Die Reaktion kann z.B. in einer adsorptiven Trennung von Gasgemischen oder in einer adsorptiven Entfernung von unerwünschten Bestandteilen aus einem zu reinigenden Gas bestehen. Ein praktisches Beispiel für letzteres ist die Abscheidung von Wasser und/oder Kohlendioxid aus Luft, die einer Tieftemperaturluftzerlegungsanlage zugeführt wird. Das rieselfähige Material, welches in das Schüttbett eingebracht wird, wirkt in diesem Falle als Adsorbens und kann beispielsweise aus einem Molekularsieb bestehen.

Während der Reaktions- bzw. Adsorptionsphase wird zu reinigende Luft durch das Bett geführt und dabei Wasser und/oder Kohlendioxid an das aktive Material abgegeben. Während der Regenerierphase werden die aus der Luft entfernten Stoffe wieder desorbiert, indem ein Regeneriergas, beispielsweise Stickstoff, durch das Bett mit dem Adsorbens geleitet wird. Dabei herrschen im allgemeinen andere Temperaturen und/oder Drücke als während der Adsorptionsphase.

Ein Reaktor der eingangs genannte Art kann außerdem für katalytische Reaktionen eingesetzt werden, beispielsweise zur Entfernung von $NO_x$ aus dem Abgas von Verbrennungsanlagen. Das rieselfähige Bettmaterial besteht in diesem Fall zum Beispiel aus metalldotierten Molekularsieb-Teilchen.

Ein zentrales Problem bei der Konstruktion eines Reaktors dieser Art besteht in den großen Temperaturunterschieden zwischen den verschiedenen Betriebsphasen So strömt beispielsweise beim Regeneriervorgang - um bei dem Beispiel einer Adsorption zu bleiben - das Regeneriergas bei hoher Temperatur ein und bewirkt in kurzer Zeit eine hohe Temperaturänderung und große räumliche Temperaturgradienten innerhalb der Schüttung. Die damit verbundenen thermischen Längenänderungen der Körbe in radialer und axialer Richtung führen bereits im Normalbetrieb zu großen mechanischen Problemen durch Relativbewegungen zwischen rieselfähigem Material und den Körben. Damit ist beispielsweise ein unerwünschter Abrieb des Schüttgutes verbunden. Erst recht kann es bei Betriebsstörungen und damit verbundenen stärkeren Temperaturschwankungen zu großen mechanischen Schäden kommen. Ähnliche Probleme treten auch bei der Anwendung des Reaktors zu katalytischen Reaktionen auf, insbesondere in der Anfahrphase und bei Betriebsstörungen.

Um diesen Schwierigkeiten zu begegnen, sind verschiedene Methoden entwickelt worden, mit den thermisch bedingten Längenänderungen der das Bett begrenzenden Körbe umzugehen. Einer dieser Vorschläge ist aus der AT-E-19 595 (Figur 4) bekannt. Dort wird bei einem Reaktor der eingangs genannten Art vorgeschlagen, die Körbe auf den Boden zu stellen und ihnen die Möglichkeit zur Ausdehnung nach oben einzuräumen. Die Körbe werden an ihrem oberen Ende lediglich mittels ringförmigen Führungswänden seitlich gesichert.

Mit Hilfe dieser Konstruktion können sich die Körbe bei Erhitzung in axialer Richtung ausdehnen und bei Abkühlung wieder zusammenziehen. Damit wird vermieden, daß sich mechanische Spannungen aufgrund der thermischen Längenänderungen dahingehend auswirken, daß sich die radialen Abmessungen des Bettes verändern und das Schüttgut absackt. Die axiale Bewegung bewirkt jedoch immer einen unerwünschten Abrieb des rieselfähigen Materials und birgt außerdem bei extrem hohen Temperaturschwankungen die Gefahr von Verwerfungen innerhalb der Schüttung. Das rieselfähige Material ist also weiterhin Verschleiß ausgesetzt und Betriebsstörungen sind mit dem Risiko großer Schäden an Reaktor und Schüttung behaftet. Die Wirtschaftlichkeit des vorbekannten Reaktors wird durch relativ häufiges Wechseln der Schüttung und durch Reparaturarbeiten zur Beseitigung von während des Betriebes entstehenden Schäden eingeschränkt.

Der Erfindung liegt daher die Aufgabe zugrunde, den Reaktor der eingangs genannten Art dahingehend weiter zu entwickeln,
daß ein besonders sicherer und wirtschaftlicher Betrieb ermöglicht wird und insbesondere Schäden an rieselfähigem Material und Reaktor - sowohl im Normalbetrieb als auch bei Störungen - weitgehend vermieden werden.

Diese Aufgabe wird dadurch gelöst, daß mindestens einer der beiden Körbe, welche das mit rieselfähigem Material gefüllte Bett begrenzen, im Bereich des Betts in axialer Richtung dehnbar und an seiner Oberseite starr mit dem Mantel verbunden ist.

Das Begriffspaar "starr" und "dehnbar" bezieht sich nicht auf die dem Material selbst innewohnenden Eigenschaften wie Elastizität oder Temperaturgängigkeit, sondern auf die Möglichkeit von Längenänderungen aufgrund der äußeren Form des Körpers, in diesem Fall eines Korbes. Ein in einer bestimmten Richtung starrer Körper ist in diesem Sinne durchaus fähig, sich z.B. bei Temperaturänderungen auszudehnen. Beispielsweise ist ein gewelltes Blech starr in Richtung der Wellentäler und dehnbar in der dazu senkrechten Richtung. Ein auf einen Zylindermantel gebogenes Wellblech, bei dem die Wellentäler auf Kreisen um die Zylinderachse verlaufen, ist in axialer Richtung dehnbar und in tangentialer und damit auch in radialer Richtung starr.

Auch eine Spiralfeder kann in diesem Sinne als axial dehnbar und radial starr bezeichnet werden.

Der erfindungsgemäßen Konstruktion liegt der Gedanke zugrunde, Relativbewegungen zwischem den rieselfähigen Material und mindestens einem Korb in axialer Richtung weitestgehend zu vermeiden. Dies wird durch zwei Merkmale erreicht. Zum einen bewirkt die starre Befestigung des Korbes an beiden Enden, daß die geometrische Länge des Korbes praktisch unabhängig von den Temperaturverhältnissen im Inneren des Reaktors festgelegt ist. Dieses Maß wird durch die Höhe des Mantels bestimmt, der selbst kaum Temperaturänderungen ausgesetzt ist. Die Enden des Korbes werden durch diese starre Befestigung an temperaturinduzierten Bewegungen gehindert. Zum zweiten fängt die axiale Dehnbarkeit des Korbes die Ausdehnung des Materials bei Temperaturerhöhungen über die gesamte Länge des Korbes auf, so daß an keiner Stelle temperaturabhängige Verschiebungen auftreten können.

Die Vermeidung von Verschiebungen bedeutet wiederum, daß - auch bei großen Temperaturschwankungen - praktisch keine Relativbewegungen zwischen Schüttung und Korb auftreten und der Reaktor damit besonders sicher betrieben werden kann. Der Zuwachs an Sicherheit bewirkt eine weitgehende Vermeidung von Betriebsunterbrechungen und damit insgesamt eine hohe Wirtschaftlichkeit des Reaktors.

Mit Hilfe dieser Konstruktion ist es möglich, die bei katalytischen und bei Adsorptionsreaktionen Temperaturunterschiede zu verarbeiten, ohne daß störende Relativbewegungen auftreten. Dazu muß für die Körbe selbstverständlich ein geeignetes Material mit einem Ausdehnungskoeffizienten, der mit demjenigen des rieselfähigen Materials in einem bestimmten Verhältnis steht, und eine geeignete Form von Korbblechen verwendet werden, etwa in der im Ausführungsbeispiel beschriebenen Art. Das Verhältnis der Temperaturausdehnungskoeffizienten von Korbmaterial zu Schüttmaterial liegt in etwa zwischen 0,25 und 2,5 , vorzugsweise zwischen ungefähr 1,0 und 2,0 .

Während beim vorbekannten Stand der Technik komplizierte und aufwendige technische Maßnahmen angewandt werden, um die thermische Längenänderung des Materials der Körbe in eine Ausdehnung des gesamten Korbes umzusetzen und damit die Relativbewegung zwischen Schüttung und Korb sogar zu unterstützen, wird bei dem erfindungsgemäßen Reaktor mittels eines wesentlich weniger komplizierten Aufbaues die unerwünschte Relativbewegung verhindert. Umfangreiche Versuche und Berechnungen haben gezeigt, daß es entgegen der bisher gehegten Befürchtungen durchaus möglich ist, dabei Temperaturdifferenzen von bis zu ca. 300 K ohne Schäden für Reaktor und Schüttung zu verarbeiten.

Dieser Vorteil kann gemäß einer günstigen Weiterbildung der Erfindung dadurch unterstützt werden, daß mindestens einer an der Oberseite starr mit dem Mantel verbundener Korb in axialer Richtung vorgespannt ist. Falls beide Körbe fest eingespannt, d.h. oben und unten starr mit dem Mantel verbunden sind, werden vorzugsweise beide Körbe vorgespannt.

Bei der Montage des Reaktors, die bei Umgebungstemperatur stattfindet, werden der oder die Körbe gegebenenfalls unter axiale Spannung gesetzt. Das Maß der Vorspannung richtet sich nach der Höhe des Temperaturgradienten über die Schüttung. Bei Temperaturerhöhung, etwa durch erhitztes Regeneriergas, wird die Temperaturgängigkeit des Materials zunächst durch eine Verringerung der Vorspannung aufgefangen. Die Vorspannung wird dabei vorzugsweise so dimensioniert, daß etwa die Hälfte der zu erwartenden axialen Temperaturausdehnung durch den Abbau der Vorspannung kompensiert werden kann. Erst bei höherer Temperatur ist die Vorspannung vollständig abgebaut und die temperaturbedingte Ausdehnung des Materials muß als Stauchung durch die axiale Dehnbarkeit der Form der Körbe aufgefangen werden. Auf diese Weise werden die in axialer Richtung wirkenden Druckkräfte erheblich verringert und auch bei höherer Temperatur ist ein sicherer Betrieb des Reaktors gewährleistet.

Die Erfindung wird nun anhand eines in den Zeichnungen dargestellten Ausführungsbeispiels näher erläutert.

Hierbei zeigen:

Figur 1 einen Schnitt durch den Reaktor des Ausführungsbeispiels entlang der Symmetrieachse in stark vereinfachter Darstellung,

Figur 2 Ausschnitt A von Figur 1 im Detail,

Figur 3 eine Abwicklung eines Korbes eines ersten Typs im Ausschnitt,

Figuren 4, 5 einen Korb eines zweiten Typs in Abwicklungs- und Schnittdarstellung, sowie

Figuren 6,7 einen Korb einer dritten Variante in Abwicklungs- und Schnittdarstellung.

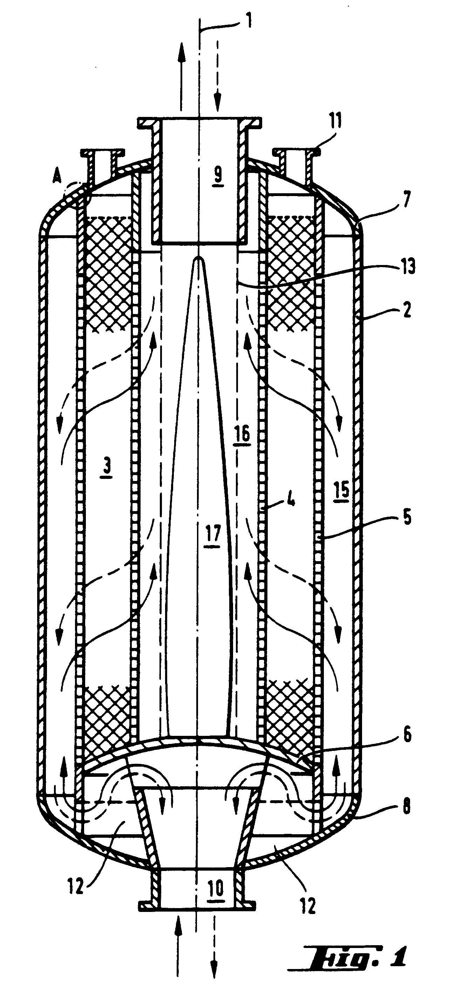

Figur 1 zeigt den prinzipiellen Aufbau der beispielhaften Ausführungsform des erfindungsgemäßen Reaktors mit seinen wesentlichen Merkmalen. Die Darstellung ist der Einfachheit halber sehr schematisch ausgeführt, insbesondere entsprechen die Verhältnisse zwischen den äußeren Abmessungen des Reaktors und den Materialdicken nicht den wirklichen Maßen.

Der Reaktor ist im wesentlichen zylindersymmetrisch um die Achse 1 aufgebaut. Er wird nach außen begrenzt durch einen Mantel 2, welcher eine obere 7 und eine untere Kalotte 8 mit Eintritts- 10 und Austrittsöffnungen 9 für zu reinigendes Gas aufweist. Die obere Kalotte 7 ist außerdem durch Stutzen 11 zum Einfüllen und Absaugen von rieselfähigem Material durchbrochen.

Im Inneren des Reaktors ist ein ringförmiges Adsorptionsbett 3 angeordnet, welches durch zwei zylindermantelförmige Körbe, einen äußeren 5 und einen inneren 4 begrenzt ist. Das Bett 3 wird nach unten hin durch den Boden 6 abgeschlossen, welcher über sternförmig angeordnete Rippen 12 starr an der unteren Kalotte 8 des Mantels 2 befestigt ist. Der innere Korb 4 ist an seinem unteren Ende starr mit dem Boden 6 verbunden. Er stützt sich ebenfalls über die sternförmig angeordneten Rippen 12 auf der unteren Kalotte 8 des Mantels 2 ab. Der äußere Korb 5 steht auf der unteren Kalotte 8 auf, ist mit dieser verschweißt und damit starr mit dem Mantel 2 verbunden.

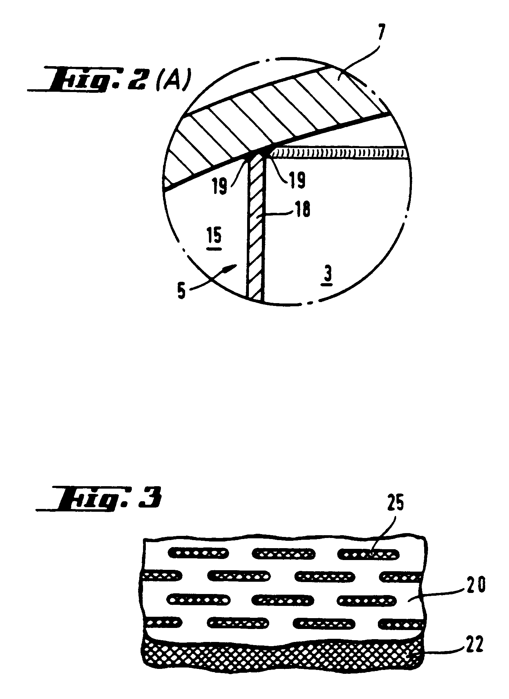

Die Körbe 4, 5 sind aus zum größten Teil gelochtem Blech gefertigt. Die Löcher sind in Figur 1 durch waagrechte Striche (nicht maßstäblich) angedeutet. Lediglich an den Enden ist auch ungelochtes Blech verwendet. Näheres über den Aufbau der Körbe 4, 5 ist den Figuren 2 und 3 und dem zugehörigen Beschreibungstext zu entnehmen.

Innerhalb des Bettes 3 befindet sich eine Schüttung aus rieselfähigem Material. In der konkreten Verwendung des Reaktors handelt sich es um adsorptives Material, ebensogut könnte ein rieselfähiger Katalysator eingefüllt sein.

Die Strömungsrichtung des zu reinigenden Gases wird in Figur 1 durch Pfeile mit durchgezogenen Linien angedeutet (Reaktions- bzw. Adsorptionsphase). Dabei strömt das zu reinigende Gas, beispielsweise Luft, über die Einlaßöffnung 10 in den Reaktor ein, wird durch die Unterseite des Bodens 6 umgelenkt und dabei tropfbares Wasser abgeschieden. Anschließend wird das zu reinigende Gas in den äußeren Ringraum 15 zwischen Mantel 2 und äußerem Korb 5 geleitet. Von dort strömt das zu reinigende Gas mit einer radialen Komponente durch das Adsorptionsbett 3 in den inneren Ringraum 16. Dieser wird außer durch den inneren Korb 4 auch durch einen aus Kegelstümpfen aufgebauten Verdrängungskörper 17 begrenzt, der den Querschnitt des inneren Ringraumes 16 verringert. Dadurch wird eine annähernd gleichmäßige Stromdichte des zu reinigenden Gases im Bett 3 weitgehend unabängig von der axialien Koordinate gewährleistet. Zwischen dem inneren Korb 4 und dem Verdrängungskörper 17 ist im Bedarfsfall ein Staubsieb 13 vorgesehen.

Falls bei der Reaktion eine Regenerierung notwendig ist, wird während der Regenerierphase ein Regeneriergas, beispielsweise Stickstoff, in umgekehrter Richtung geführt (gestrichelte Pfeile in Figur 1).

Figur 2 zeigt den Ausschnitt A von Figur 1 im Detail, auf dem die obere Befestigung des äußeren Korbes 5 an der oberen Kalotte 7 des Mantels 2 zu erkennen ist. Der obere, aus ungelochtem Blech 18 gearbeitete Teil des äußeren Korbes 5 ist mittels zweier ringförmiger Schweißnähte 19 starr mit der oberen Kalotte 7 verbunden. Bei der Bauweise des Ausführungsbeispiels ist der innere Korb 4 auf die gleiche Weise mit der oberen Kalotte 7 des Mantels 2 verschweißt. Die Befestigung des unteren Endes des äußeren Korbes 5 an der unteren Kalotte 8 ist analog ausgeführt.

Die langgezogenen Löcher 25 im Blech 20 sind regelmäßig auf Kreisen um die Symmetrieachse 1 angeordnet. Ihre Abmessungen und ihre Konfiguration werden in Abhängigkeit von dem zu erwartenden Temperaturgradienten ermittelt. Im vorliegenden Beispiel betragen die Lochbreite 3 mm, die Lochlänge 30 mm und die Stegbreite (seitlicher Abstand zwischen Löchern zweier benachbarter Kreise) 6 mm (siehe Figur 3). Falls die Teilchengröße des Schüttgutes kleiner als die Lochbreite ist, weisen beide Körbe 4, 5 an ihrer dem Inneren des Bettes 3 zugewandten Seite ein Drahtnetz 22 auf, wie es in Figur 3 anhand des äußeren Korbes 5 gezeigt ist.

Die Konfiguration des Lochblechs 20 legt die für die Erfindung wesentlichen Eigenschaften der Körbe fest. Dies sei anhand der in Figur 3 gezeigten Abwicklung erläutert. Die Horizontale in der Zeichnung entspricht einer tangentialen Richtung um die Symmetrieachse des Reaktors, die Vertikale der axialen Richtung. Zwischen jeweils zwei Reihen von Löchern weist das Lochblech in tangentialer Richtung durchgehende Stege auf und verhält sich deshalb entlang der Richtung der Stege ähnlich wie ein ungelochtes Material. In diesem Sinne verhält sich das Lochblech 20 starr in tangentialer Richtung. Der im wesentlichen aus einem zylindermantelförmigen Lochblechteil bestehende Korb ist damit radial starr. In axialer Richtung weist das Lochblech 20 keine auf einer Geraden durchgehenden Stege auf, sondern wird immer wieder durch Löcher unterbrochen. Es ist daher in dieser Richtung stauchbar und dehnbar. In axialer Richtung anliegende Kräfte können nicht nur durch die Elastizität des Materials, sondern auch durch Änderung der Form des Lochbleches 20, etwa durch Verzerrung der Form der Löcher 25 aufgenommen werden.

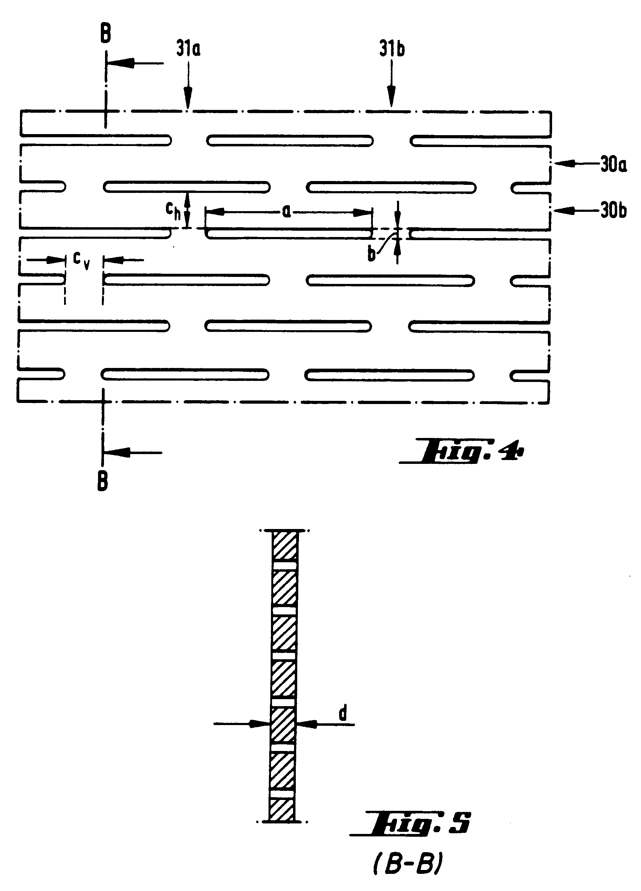

Figuren 4 und 5 zeigen eine gegenüber dem Korb der Figur 3 leicht abgewandelte zweite Ausführungsform. Figur 4 stellt eine Projektion eines Ausschnittes der Zylinderfläche eines Korbes dar, Figur 5 einen Schnitt entlang einer axialen Linie; die Symmetrieachse des Reaktors verläuft in den Figuren vertikal. Zunächst seien die gemeinsamen Merkmale der ersten beiden Ausführungsformen geschildert:

Es handelt sich bei beiden Korbtypen um perforiertes, in der Regel gestanztes, Metallblech mit einer Stärke d von 2 bis 10, vorzugsweise 2,5 bis 6,0 mm. Die Löcher sind langgestreckt, mit ihrer längeren Seite entlang der Horizontalen (in den Zeichnungen die Waagerechte) ausgerichtet und auf Kreisen um die Symmetrieachse des Reaktors angeordnet. Zwischen jeweils zwei benachbarten Kreisen befindet sich ein vertikal durchgehender, also nicht durch Löcher unterbrochener Steg (30a, 30b). Die Löcher zweier horizontal benachbarter Kreise sind gegeneinander versetzt, so daß in axialer (=vertikaler) Richtung (Pfeile 31a, 31b) keine durchgehenden Stege vorhanden sind. Die Körbe sind daher einerseits entlang den Kreisen (tangential) und damit insgesamt radial starr und können andererseits axiale Längenänderungen durch Verbiegungen der Löcher aufnehmen (axial dehnbar im Sinne der Erfindung). Diese Eigenschaft ist in der speziellen Geometrie der Perforation begründet und qualitativ bei den ersten beiden Ausführungsformen identisch. Quantitative Unterschiede bestehen jedoch bei den Maßen der Löcher:

Korbtyp der Figur 3:

Länge der Löcher a:
20 bis 50 mm, vorzugsweise 25 bis 35 mm
Breite der Löcher b:
2 bis 5 mm, vorzugsweise 2,5 bis 3,5 mm
horizontale Stegbreite $c_h$:
4 bis 8 mm, vorzugsweise 5,0 bis 7,0 mm
vertikale Stegbreite $c_v$:
5 bis 20 mm, vorzugsweise 8,0 bis 12,0 mm

Korbtyp der Figuren 4 und 5:

Länge der Löcher a:
10 bis 40 mm, vorzugsweise 20 bis 30 mm
Breite der Löcher b:
0,8 bis 2,0 mm, vorzugsweise 1,0 bis 1,5 mm
horizontale Stegbreite $c_h$:
3,0 bis 10 mm, vorzugsweise 4,0 bis 6,0 mm
vertikale Stegbreite $c_v$:
3,0 bis 12 mm, vorzugsweise 5,0 bis 7,0 mm

Ein spezielles Ausführungsbeispiel gemäß Figuren 4 und 5 besitzt folgende Maße:

$$a = 25 \text{ mm} \qquad b = 1,2 \text{ mm} \qquad c_h = 5,0 \text{ mm}$$

$$c_v = 6,0 \text{ mm} \qquad d = 4,0 \text{ mm}$$

Die geringeren Maße der Löcher bei der zweiten Ausführungsform haben zur Folge, daß auf ein zusätzliches feinmaschiges Drahtnetz auf der Innenseite des Korbes (in Figur 5 rechts) in der Regel verzichtet werden kann, da die Adsorbens- bzw. Katalysatorteilchen allein durch das perforierte Blech zurückgehalten werden.

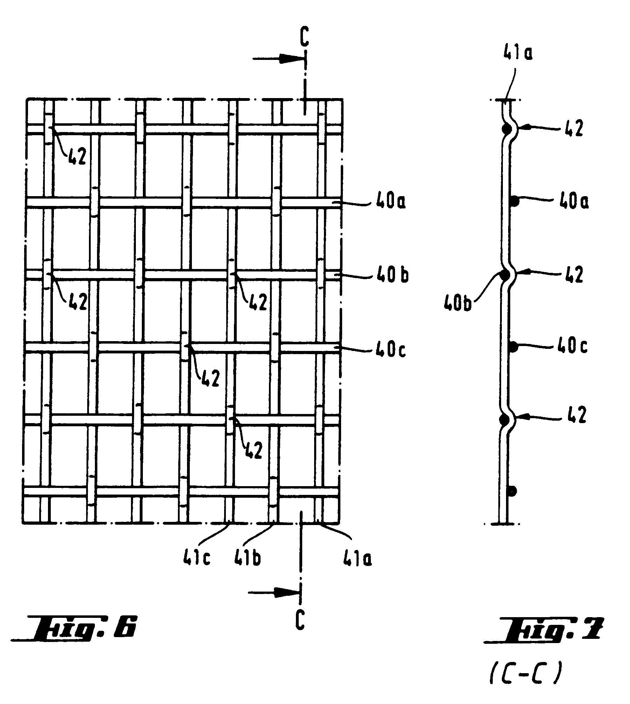

Die Figuren 6 und 7 zeigen in ähnlicher Ansicht eine dritte Korbversion, mit welcher die Erfindung realisiert werden kann. Diese ist vollständig anders konstruiert, nämlich als Drahtgewebe.

Kreisförmige, horizontale Drähte 40a, 40b, 40c sind dabei mit vertikalen (axialen) Drähten 41a, 41b, 41c verwoben. Die horizontalen Drähte 40a, 40b, 40C weisen dabei keine nennenswerten Biegungen auf und bewirken damit (ähnliche den durchgehenden Stegen 30a, 30b des vorhergehenden Beispiels) die radiale Starrheit des Korbes. Die vertikalen Drähte 41a, 41b, 41c sind jedoch in regelmäßigen Abständen von zwei Maschenweiten mit Ausbiegungen, sogenannten Gelenken, 42 versehen. Diese können bei Zug- oder Dehnspannungen in vertikaler (axialer) Richtung ihre Form ändern und damit temperaturinduzierte Längenänderungen kompensieren. Der als Drahtgitter realisierte Korb ist durch seine spezielle Webart radial starr und axial dehnbar im Sinne der Erfindung. Diese Eigenschaft kann durch die für die Drähte gewählten Materialien unterstützt werden. Dabei ist es vorteilhaft, wenn für die horizontalen Drähte 40a, 40b, 40C Invar-Stahl, für die vertikalen (axialen) Drähte 41a, 41b, 41c CrNi-Stahl verwendet wird. Die Drahtdicke liegt im allgemeinen zwischen 1,0 und 10 mm, vorzugsweise zwischen 1,0 und 5,0 mm, höchst vorzugsweise zwischen 2,0 und 3,0 mm. Für die Maschenweite wird ein Maß zwischen 3,0 und 20 mm, vorzugsweise zwischen 6 und 12 mm gewählt.

Da die Maschenweite im allgemeinen zu groß ist, um die Adsorbens- bzw. Katalysatorteilchen zurückzuhalten, muß an der Innenseite des Drahtgewebes (in Figur 7 links) zusätzlich ein feinmaschiges Drahtnetz angebracht werden. Dieses ist in den Figuren 6 und 7 nicht gezeigt. Innerhalb des Reaktors hat das Drahtnetz in etwa dieselbe vertikale Ausdehnung wie das Bett. Oberhalb und unterhalb wird der Korb analog zu Figur 1 über unperforiertes Blech starr mit dem Mantel verbunden.

## Patentansprüche

1.  Reaktor, der im wesentlichen zylindersymmetrisch um eine im wesentlichen vertikal verlaufende Achse (1) aufgebaut ist und einen Mantel (2) und innerhalb des Mantels (2) ein ringförmiges Bett (3) aufweist, welches mit rieselfähigem Material gefüllt ist und durch einen inneren (4) und einen äußeren (5) Korb sowie an seiner Unterseite durch einen von unten her am Mantel (2) abgestützten Boden (6) begrenzt ist, wobei beide Körbe (4,5) in radialer Richtung starr und an ihrer Unterseite starr mit dem Mantel (2) verbunden sind, dadurch gekennzeichnet, daß mindestens einer der beiden Körbe (4,5) im Bereich des ringförmigen Betts (3) in axialer Richtung dehnbar und an seiner Oberseite starr mit dem Mantel (2) verbunden ist.

2.  Reaktor nach Anspruch 1, dadurch gekennzeichnet, daß beide Körbe (4,5) in axialer Richtung dehnbar und an ihrer Oberseite starr mit dem Mantel (2) verbunden sind.

3.  Reaktor nach Anspruch 1 oder 2, dadurch gekennzeichnet, daß ein an der Oberseite starr mit dem Mantel (2) verbundener Korb (4,5) in axialer Richtung vorgespannt ist.

4.  Reaktor nach Anspruch 2, dadurch gekennzeichnet, daß beide Körbe 4, 5 in axialer Richtung vorgespannt sind.

## Revendications

1.  Réacteur, de forme essentiellement d'un cylindre de révolution autour d'un axe (1) disposé essentiellement de façon verticale et comprenant une enveloppe (2) et à l'intérieur de l'enveloppe un lit annulaire (3) qui est rempli de matériau susceptible de fluer et qui est limité par un panier intérieur (4) et un panier extérieur (5) et à sa partie inférieure par un fond (6) supporter inférieurement sur l'enveloppe (2), les deux paniers (4, 5) étant raidis dans leur direction radiale et étant, par le côté inférieur, relié rigidement à l'enveloppe (2), caractérisé en ce qu'au moins un des deux paniers (4, 5) est extensible en direction axiale, dans la région du lit annulaire (3) et est relié rigidement à l'enveloppe (2) à sa face supérieure.

2.  Réacteur selon la revendication 1, caractérisé en ce que les deux paniers (4, 5) sont extensibles dans la direction axiale et, à leur côté supérieur, sont reliés rigidement à l'enveloppe (2).

3.  Réacteur selon la revendication 1 ou 2, caractérisé en ce que l'un des paniers (4, 5) relié rigidement au côté supérieur de l'enveloppe (2) est précontraint dans la direction axiale.

4.  Réacteur selon la revendication 2, caractérisé en ce que les deux paniers (4, 5) sont précontraints dans la direction axiale.

## Claims

1.  A reactor which is constructed substantially cylinder-symmetrically about a substantially vertically extending axis (1) and comprises a casing (2) and, inside the casing (2), an annular bed (3) which is filled with pourable material and is delimited by an inner cage (4) and an outer cage (5) and, on its underside, by a base (6) which is supported from the underneath on the casing (2), where the two cages (4, 5) are rigid in the radial direction and at their underside are rigidly connected to the casing (2), characterised in that at least one of the two cages (4, 5) is extensible in the axial direction in the region of the annular bed (3), and at its upper side is rigidly connected to the casing (2).

2. A reactor as claimed in Claim 1, characterised in that the two cages (4, 5) are extensible in the axial direction and at their upper side are rigidly connected to the casing (2).

3. A reactor as claimed in Claim 1 or 2, characterised in that a cage (4, 5) which at its upper side is rigidly connected to the casing (2) is prestressed in the axial direction.

4. A reactor as claimed in Claim 2, characterised in that the two cages (4, 5) are prestressed in the axial direction.

*Fig. 1*

*Fig.* 2 (A)

7

19    19

18

15

5

3

*Fig.* 3

25

20

22

Fig. 4

Fig. 5
(B-B)

Fig. 6

Fig. 7

(C-C)